Europäisches Patentamt

European Patent Office

Office européen des brevets

(11) Veröffentlichungsnummer: **0 354 299**
**A2**

# (12) EUROPÄISCHE PATENTANMELDUNG

(21) Anmeldenummer: **89107245.6**

(22) Anmeldetag: **21.04.89**

(51) Int. Cl.4: **F02M 23/12 , F02M 25/06**

(30) Priorität: **12.08.88 DE 3827466**

(43) Veröffentlichungstag der Anmeldung:
**14.02.90 Patentblatt 90/07**

(84) Benannte Vertragsstaaten:
**AT DE ES FR GB IT NL SE**

(71) Anmelder: **Glotur Trust Reg.**
**Städtle 36**
**LI-9490 Vaduz(LI)**

(72) Erfinder: **August, Paul, Dr.h.c. Dipl.-Ing.**
**C/Ballester 43**
**Barcelona(ES)**

(74) Vertreter: **Riebling, Peter, Dr.-Ing.**
**Patentanwalt Rennerle 10 Postfach 31 60**
**D-8990 Lindau/B.(DE)**

(54) **Vorrichtung zum Einleiten von zusätzlichen Gasströmen in den Ansaugkanal eines Vergasermotors.**

(57) Eine Vorrichtung zum Einleiten von zusätzlichen Gasströmen in den Ansaugkanal eines Vergasermotors verwendet zwei in Serie hintereinander geschaltete Aufbereitungsvorrichtungen, wobei jede Aufbereitungsvorrichtung einander gegenüberliegende Schlitze aufweist, durch die Zusatzgas in den Ansaugkanal des Vergasers eingeführt wird. Die Schlitzachsen der Schlitze der ersten Aufbereitungsvorrichtung im Vergleich zu der Schlitzachse der Schlitze der zweiten Aufbereitungsvorrichtung stehen senkrecht zueinander, so daß damit eine vollumfängliche Aufbereitung von Kondensat entlang der gesamten Ansaugkanalwandung stattfindet.

FIG 1

EP 0 354 299 A2

**Vorrichtung zum Einleiten von zusätzlichen Gasströmen in den Ansaugkanal eines Vergasermotors**

Die vorliegende Erfindung betrifft eine Vorrichtung zum Einleiten von zusätzlichen Gasströmen im Ansaugkanal eines Vergasermotors nach dem Oberbegriff des Patentanspruchs 1.

Eine derartige Vorrichtung ist mit der DE-34 13 419 C2 bekannt geworden.

Bekannterweise bildet sich beim Durchgang des Kraftstoff-Luftgemisches um die teilgeöffnete Drosselklappe an der Vergaserwand im Bereich des Ansaugkanals Kraftstoff-Kondensat, welches mit Brennluft unvermischt in die Zylinder gelangt.

Daraus ergibt sich, daß die einzelnen Zylinder kein vollkommen homogenes Gemisch erhalten und außerdem die Gemischzusammensetzung unterschiedliche Kraftstoffanteile zu den verschiedenen Zylindern hat.

Mit der Vorrichtung nach der DE-3 413 419 wurde im unteren Teillastbereich die Gemischbildung wesentlich verbessert, so daß die NOx um ca. 50% gesenkt werden konnten, wenn Abgas als zusätzliches Gas benutzt wurde. Dabei wurde durch diese Gemischverbesserung weder CO, CH oder der Verbrauch erhöht, trotz der erreichten, starken Absenkung der NOx-Anteile.

Mit der bekannten Vorrichtung besteht jedoch der Nachteil, daß eine derartige günstige Gemischaufbereitung lediglich im Leerlauf einschließlich des unteren Teillastbereichs möglich ist.

Eine derartige Vorrichtung ist z.B. nicht geeignet, einen Magermotor zu realisieren, bei dem eine Gemischaufbereitung über den gesamten Leistungsbereich des Vergasermotors notwendig ist.

Der vorliegenden Erfindung liegt deshalb die Aufgabe zugrunde, eine Vorrichtung der eingangs genannten Art so weiterzubilden, daß ein Magermotor ohne Zünd- und Durchbrennschwierigkeiten mit Gemischen von Lambda von 1,5 gefahren werden kann.

Zur Lösung der gestellten Aufgabe ist die Erfindung dadurch gekennzeichnet, daß mindestens eine zweite Aufbereitungsvorrichtung stromab und parallel zur ersten Aufbereitungsvorrichtung im Ansaugkanal angeordnet ist, und daß die Schlitzachse der Schlitze der ersten Aufbereitungsvorrichtung senkrecht zur Schlitzachse der Schlitze der zweiten Aufbereitungsvorrichtung angeordnet ist.

Wesentliches Merkmal der vorliegenden Erfindung ist also, daß der ersten Aufbereitungsvorrichtung eine zweite Aufbereitungsvorrichtung nachgeschaltet ist und daß die erste Aufbereitungsvorrichtung die Aufbereitung des Gemisches vom Leerlauf aus bis zum unteren Teillastbereich vornimmt, während die zweite, nachgeschaltete Aufbereitungsvorrichtung die Aufbereitung des Gemisches vom unteren Teillastbereich bis zum Vollastbereich übernimmt.

Wichtig hierbei ist es, daß die einander gegenüberliegenden Schlitze der ersten Aufbereitungsvorrichtung im Bereich der maximalen Kondensatbildung im Ansaugkanal des Vergasers angeornet sind. Es sind dies die Bereiche, die als sichelförmige Flächen sich bei teilgeöffneter Drosselklappe zwischen dem Umfang der Drosselklappe und der benachbarten, gegenüberliegenden Wand des Ansaugkanals bilden.

Wegen der geringen Öffnung der Hauptdrosselklappe im Leerlauf bis zum unteren Teillasbereich schlagen sich dort Kraftstofftröpfchen nieder, die durch die einander gegenüberliegenden Schlitze der ersten Aufbereitungsvorrichtung von der Wandung des Ansaugkanals abgehoben werden und in Richtung zur Mitte des Ansaugkanals bei gleichzeitiger feinster Zerstäubung geführt werden.

Es kann jedoch nicht mit der bekannten Vorrichtung eine Aufbereitung der Kraftstofftröpfchen außerhalb des Schlitzbereichs der ersten Vorrichtung erfolgen.

Es ist auch nicht möglich, die Schlitzöffnungen der ersten Vorrichtung so zu erweitern; daß der Schlitz sich vollumfänglich an der gesamten Ansaugkanalwandung erstreckt, weil dann keine genügend hohe Luftgeschwindigkeit mehr erzeugt werden könnte, um die geforderte kondensatabhebende Wirkung und die feine Zerstäubung der Kraftstofftröpfchen zu erreichen.

Es hat sich nun herausgestellt, daß eine gemischaufbereitende Wirkung über den Teillastbetrieb hinaus bis zum Vollastbereich notwendig ist, um das beschriebene Magermotor-Konzept zu verwirklichen.

Erfindungsgemäss wird deshalb unter der ersten Vorrichtung eine zweite Aufbereitungsvorrichtung angeordnet, bei der die Schlitzachse (das ist die Symmetrie-Linie, welche die beiden Schlitze miteinander verbindet) senkrecht zur Schlitzachse der Schlitze der ersten Aufbereitungsvorrichtung ist.

Ferner ist wesentlich, daß den Schlitzen der zweiten Aufbereitungsvorrichtung das zusätzliche Gas (Zusatzluft oder Abgas) erst ab dem unteren Teillastbereich bis zum Vollastbereich zugeführt wird.

Damit werden mehrere Vorteile gleichzeitig erzielt.

Zum einen wird mit der ersten Aufbereitungsvorrichtung eine ausgezeichnete Gemischaufbereitung im Leerlauf bis zum unteren Teillastbereich erreicht.

Zum anderen erfolgt dann eine weitere Aufbereitung ab dem unteren Teillastbereich durch die zweite nachgeschaltete Aufbereitungsvorrichtung, welche gewährleistet, daß nun bei halb bis voll geöffneter

EP 0 354 299 A2

Hauptdrosselklappe eine vollständige Aufbereitung des Gemisches vollumfänglich an der gesamten Ansaugkanalwandung stattfindet.

Bei Beibehaltung der Vorteile der ersten Gemischaufbereitungsvorrichtung werden also durch Nachschaltung einer zweiten Gemischaufbereitungsvorrichtung mit zur ersten Aufbereitungsvorrichtung versetzter Schlitzachse und verzögerter Zufuhr von Zusatzgas die beschriebenen Vorteile erreicht.

Wichtig ist also, daß die Schlitze der ersten und zweiten Aufbereitungsvorrichtung so bemessen werden, daß sie als Meßquerschnitt wirken, d.h. als einzige Begrenzung für das Zusatzgas, welches über ein eigenes Steuerorgan (Drosselklappe oder Ventil) den Schlitzen zugeführt wird.

Dadurch wird gewährleistet, daß das zusätzliche Gas den Schlitzen mit hoher bis Schallgeschwindigkeit entströmt.

Um eine über den gesamten Umfang der Ansaugkanalwandung erstreckende Aufbereitung zu erreichen, wird es hierbei bevorzugt, wenn die Summe der Öffnungswinkel der Schlitze der ersten und zweiten Aufbereitungsvorrichtung sich etwa zu 360° summiert.

. Das heisst, bei Projektion von der Hauptdrosselklappe auf die beiden darunter angeordneten Aufbereitungsvorrichtungen ist erkennbar, daß die Schlitze der ersten Aufbereitungsvorrichtung zusammen mit den hier zu versetzenden Schlitzen der zweiten Aufbereitungsvorrichtung jeden Bereich der Ansaugkanalwandung erfassen und hierdurch eine optimale kondensatabhebende und gemischaufbereitende Wirkung gewährleistet ist.

1Der Erfindungsgegenstand der vorliegenden Erfindung ergibt sich nicht nur aus dem Gegenstand der einzelnen Patentansprüche, sondern auch aus der Kombination der einzelnen Patentansprüche untereinander. Alle in den Unterlagen - einschließlich der Zusammenfassung -offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von lediglich einen Ausführungsweg darstellende Zeichnungen näher erläutert. Hierbei gehen aus den Zeichnungen und ihrer Beschreibung weitere erfindungswesentliche Merkmale und Vorteile der Erfindung hervor.

Es zeigen:

Figur 1: Schnitt durch einen Vergaser mit Vorrichtungen nach der Erfindung und einem zusätzlichen Turbo-Zerstäuber;

Figur 2: Schnitt gemäss der Linie II-II in Figur 1;

Figur 3: Schnitt gemäss der Linie III-III in Figur 1;

Figur 4: Schnitt durch den Ansaugkanal des Vergasers oberhalb der Drosselklappe bei wenig geöffneter Drosselklappe;

Figur 5: gleiche Darstellung wie Figur 4 bei voll geöffneter Drosselklappe;

Figur 6: Diagramm der Abhängigkeit des Öffnungswinkels der Steuerorgane für die Aufbereitungsvorrichtungen in Abhängigkeit von der Motordrehzahl;

Figur 7: Diagramm der Durchflußmenge durch die Schlitze der Aufbereitungsvorrichtungen in Abhängigkeit von der Motordrehzahl;

Figur 8: vergrößerter Teilschnitt durch einen Schlitz der Aufbereitungsvorrichtung.

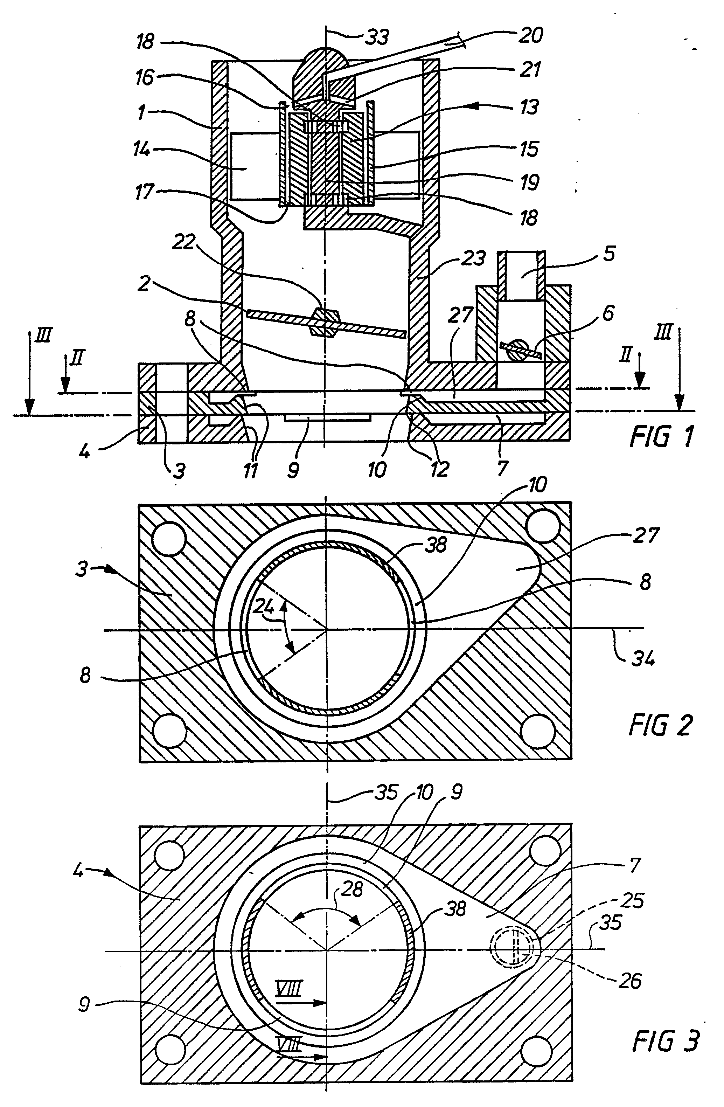

Der Vergaser nach Figur 1 besteht aus einem Gehäuse 1, wobei der Hinweis wichtig ist, daß der Vergaser auch als Zentraleinspritzung ausgebildet sein kann.

Zur besseren Gemischaufbereitung ist ein zusätzlicher Zerstäuberrotor 13 stromab der Kraftstoffzuführung 20 angeordnet.

Es wird jedoch ausdrücklich darauf hingewiesen, daß mit der vorliegenden Erfindung Schutz für die Aufbereitungsvorrichtungen allein ohne Zerstäuberrotor ersucht wird und daß der Zerstäuberrotor nur in Kombination mit den Aufbereitungsvorrichtungen Schutz geniessen soll.

Stromab des Zerstäuberrotors 13 ist die Drosselklappe 2 im Ansaugkanal 23 angeordnet.

Stromab des Vergaserausgangs sind zwei Aufbereitungsvorrichtungen 3,4 hintereinanderliegend am Vergaserausgang befestigt.

Die erste, obere Aufbereitungsvorrichtung weist einen Einlaß 5 für die Einführung bevorzugt von Abgas auf, wobei dem Einlaß 5 nachgeschaltet ein Steuerorgan ist, welches als Drosselklappe 6 ausgebildet ist.

Das über den Einlaß 5 und die Drosselklappe 6 in den Luftkanal 27 eingeführte Zusatzgas strömt um die Schlitzwandungen 38 der Aufbereitung herum und tritt durch die Schlitze 8 in den Ansaugkanal ein.

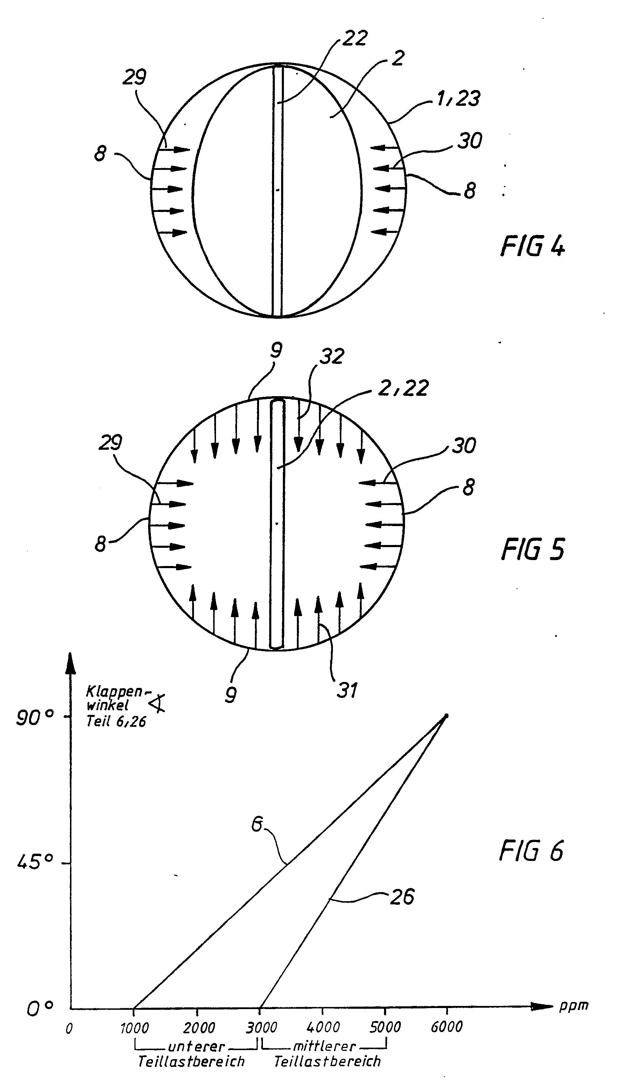

Die Figur 4 zeigt dies schematisiert.

Bei wenig geöffneter Drosselklappe (vom Leerlauf bis zum mittleren Teillastbereich) ergeben sich sichelförmige Öffnungen gemäss Figur 4 zwischen dem Außenumfang der Drosselklappe 2 und den zugeordneten Wandungen des Ansaugkanals 23.

In diesem Bereich sind die Schlitze 8 einander gegenüberliegend und zueinander fluchtend angeordnet,

3

EP 0 354 299 A2

so daß das im Luftkanal 27 strömende Zusatzgas in den Pfeilrichtungen 29,30 radial einwärts in den Ansaugkanal 23 gerichtet eintritt und dort die sich an diesen Stellen der Wandungen niederschlagenden Kraftstofftröpfchen erfasst, verwirbelt und feinstzerstäubt in den Ansaugkanal 23 wieder zurückführt.

Damit ist eine ausgezeichnete Kondensataufbereitung und Homogenisierung des Gemisches bis zum Teillastbereich gegeben.

Geht man jedoch über den mittleren Teillastbereich hinaus bis zur Vollast, dann wird die Drosselklappe gemäss der Figur 5 stärker geöffnet und es bildet sich auch Kondensat im übrigen Bereich der Wandung, welches Kondensat von den Schlitzen 8 nicht mehr erfasst werden kann.

Deshalb ist der ersten Aufbereitungsvorrichtung 3 eine zweite Aufbereitungsvorrichtung 4 nachgeschaltet.

Gemäss Figur 3 wird das Zusatzgas in den Luftkanal 7 der zweiten Aufbereitungvorrichtung 4 über einen Einlaß 25 zugeführt, in dem ebenfalls eine Drosselklappe 26 angeordnet ist.

Die Öffnung der Drosselklappe 26 wird unabhängig von der Drosselklappe 6 gesteuert.

Das in den Luftkanal 7 eingeführte Zusatzgas strömt wiederum um die Schlitzwandungen 39 der Aufbereitungsvorrichtung herum und tritt dann über zugeordnete Schrägen 10 (wie bei der ersten Aufbereitungsvorrichtung 3) durch Schlitze 9 hindurch in den Ansaugkanal ein.

Gemäss Figur 2 und 3 ist die Schlitzachse 34 der Schlitze 8 senkrecht zur Schlitzachse 35 der Schlitze 9 angeordnet.

Man erkennt ferner, daß die Öffnungswinkel 24,28 der Schlitze 8,9 sich in etwa zu 360° summieren.

Dies bedeutet gemäss Figur 5, daß eine vollumfängliche Aufbereitung des Kondensats an der gesamten Ansaugkanalwandung stattfindet.

Das Zusatzgas strömt damit in den Pfeilrichtungen 31,32 in den Ansaugkanal ein, während senkrecht hierzu das Zusatzgas in den Pfeilrichtungen 29,30 über die Schlitze 8 in den Ansaugkanal eintritt.

Die Schlitze 8 und 9 sind in ihrem Querschnitt so eng gehalten, daß sie bereits kurz nach dem Öffnen der Drosselklappen 6,26 für das Zusatzgas einen kleineren Querschnitt (Querschnittsbegrenzung) ergeben als die geöffnete Drosselklappe 6,26 selbst. Die Schlitze 8,9 werden dadurch kurz nach Öffnen der zugeordneten Drosselklappen 6,26 zum Meßquerschnitt für das einströmende Zusatzgas, wodurch die durch die Schlitze strömenden Gase sehr hohe bis Schallgeschwindigkeit erreichen.

Das vom Vergaser kommende und sich an der Ansaugkanalwandung 23 niederschlagende Kondensat strömt über Schrägen 11 mit darunter angeordneten Abreißkanten 12 und wird dort über die durch die Schlitze 8,9 mit sehr hoher Geschwindigkeit einströmenden Gase nicht nur abgerissen, sondern auch feinstzerstäubt in Richtung zur Strömungsmitte des Ansaugkanalrohrs getrieben, was zu einer Homogenisierung des Gesamtgemisches führt.

Zur Förderung dieses mehrstufigen Abreißvorganges sind die Schrägen 11 nach oben hin zurückversetzt und verkleinern nach unten hin den Durchgang.

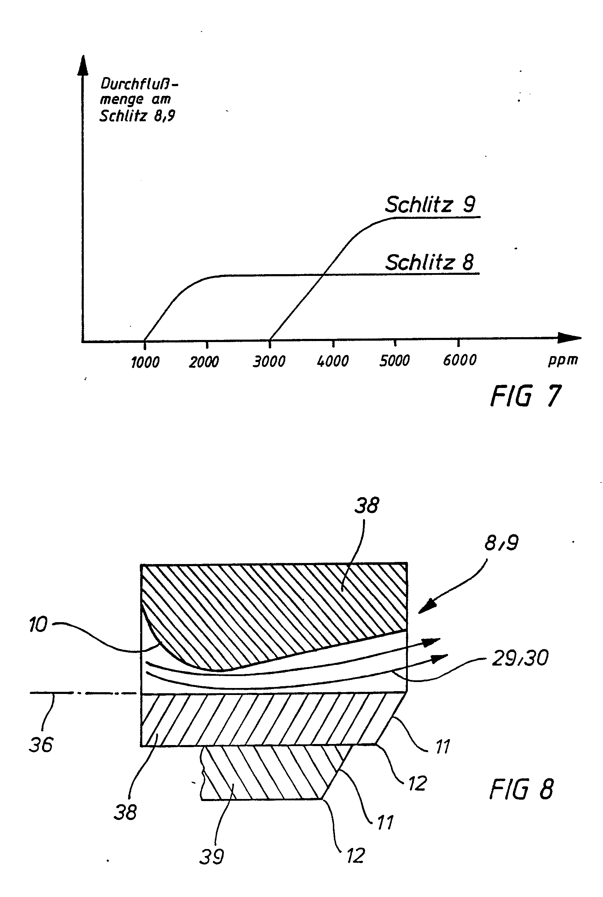

Dies ist schematisiert in Figur 8 dargestellt, wo zusätzlich vergrößert dargestellt ist, daß jeder Schlitz 8,9 die Größe einer halben Lavall-Düse hat. Eine volle Lavall-Düse wäre durch Spiegelung des oberen Teils der Figur 8 an der Teilungslinie 36 verwirklicht.

Selbstverständlich ist auch eine volle Lavall-Düse für die Ausbildung der Schlitze 8,9 möglich.

Die Figur 8 zeigt vergrößert die dachziegelartig zurückversetzte Anordnung der Schrägen 11 mit daran ansetzenden Abreißkanten 12.

Ferner ist erkennbar, daß an der Einströmmündung jeden Schlitzes 8,9 eine Schräge 10 angeordnet ist.

Beim Betrieb des Motors im unteren Teillastbereich wird gemäss den Figuren 6 und 7 über den Einlaß 5 vorzugsweise Abgase zugeführt, das über die Schlitze 8 die Kondensataufbereitung und Homogenisierung des Gemisches in diesem Bereich vornimmt.

Aus Figur 7 ist erkennbar, daß bereits schon kurz nach Überschreiten des Leerlaufbereichs die volle Luftmenge aus den Schlitzen 8 der ersten Aufbereitungsvorrichtung 3 entströmt und hierdurch eine optimale Kraftstoffaufbereitung bis zum mittleren Teillastbereich (Figur 6) stattfindet.

Hierbei ist die Drosselklappe 6 über eine Verbindung (Gestänge oder dergleichen) mit der Hauptdrosselklappe 2 verbunden.

Bei Überschreitung des unteren Teillastbereichs (etwa ab 60 - 80 km/h Fahrleistung) wird auch die Drosselklappe 26 im Einlaß 25 der zweiten Aufbereitungsvorrichtung 4 geöffnet, wodurch über die Schlitze 9 Gas wieder mit hoher Geschwindigkeit einströmt und zusätzlich in diesem anderen Wandbereich (vergl. Figur 5) die Kondensataufbereitung und Homogenisierung des Gemisches vornimmt.

Auch hier wird mit hoher Geschwindigkeit das Randgemisch zur Strömungsmitte des Hauptgemisches geführt. Durch die versetzte Hintereinanderschaltung der ersten Aufbereitungsvorrichtung 3 zur zweiten Aufbereitungsvorrichtung 4 wird also nicht nur in den entsprechenden Teilbereichen des Motorenbetriebs die Kondensataufbereitung mit größtem Wirkungsgrad vorgenommen, sondern es findet auch eine sehr

4

wirkungsvolle Durchmischung der Randgemischteile mit dem in der Mitte strömenden Hauptgemisch von allen vier Seiten (Schlitzseiten) statt.

Die Figur 7 zeigt, daß es hierbei bevorzugt wird, wenn die Gasmenge, welche durch die Schlitze 9 strömt, größer ist als die Gasmenge durch die Schlitze 8. Das heisst, der Schlitzquerschnitt der Schlitze 9 ist größer als der der Schlitze 8.

Diese Dimensionierung wird insbesondere dann bevorzugt, wenn in der ersten Aufbereitungsvorrichtung 3 Abgas und in der zweiten Aufbereitungsvorrichtung Brennluft zugeführt wird.

Die Schlitzwinkel 24,28 können in weiten Grenzen variieren. Bei der ersten Aufbereitungsvorrichtung 3 wird ein Öffnungswinkel 24 von etwa 60° bevorzugt, während bei der zweiten Aufbereitungsvorrichtung 4 ein Öffnungswinkel 28 von größer als 60° bevorzugt wird.

In dem gezeigten Ausführungsbeispiel ist ferner angegeben, daß die Schlitze 8,9 so gerichtet sind, daß die Luft im wesentlichen senkrecht zur Längsachse 33 des Vergasers einströmt.

Es ist selbstverständlich in anderen abgewandelten Ausführungsformen möglich, die Luft in den Pfeilrichtungen 29,30 (vergl. Figur 8) auch schräg zur Längsachse 33 des Vergasers einströmen zu lassen.

Wichtig ist nur, daß in der ersten Aufbereitungsvorrichtung 3 das Zusatzgas senkrecht zur Längsachse der Drosselklappenwelle 22 einströmt, während in der zweiten Aufbereitungsvorrichtung 4 das Zusatzgas parallel zur Längsachse der Drosselklappenwelle 22 einströmt.

Eine weitere Verbesserung der Gemischbildung wird dadurch erreicht, daß stromauf der Drosselklappe 2 die Zusammenführung von Brennluft und Kraftstoff so vorgenommen wird, daß sich keine größeren Tropfen von Kraftstoff im Gemisch mehr befinden. Eine Möglichkeit hierfür wird mittels eines Zerstäuberrotors 13 mit Flügeln 14 erreicht.

Der Rotor hat einen feststehenden Stator 19 und einen darauf drehbar angeordneten Rotor 15. Die an diesem angebrachten Flügel 14 werden durch den Luftdurchgang im Ansaugkanal in Drehung versetzt.

Über eine Kraftstoffzuführung 20 wird bei Einspritzung dosierter Kraftstoff zugeführt, der über die Ausspritzkanäle 21 austritt und gegen den drehenden Rotor 15 gespritzt wird. Dort bildet sich ein Ringfilm aus kraftstoff, der über den Gemischausgang 17 austritt und vom Motor angesaugt wird.

Über den oben befindlichen, ringförmigen Eingang 16 tritt die Brennluft in den Ringschlitz des Motors und vermischt sich mit dem feinen Wandfilm des Kraftstoffes, der mit der Luft nach unten strömt und durch den Gemischausgang 17 in den Ansaugkanal 23 eintritt.

Da sich der Rotor 15 mit hoher Geschwindigkeit (5 - 20000 1/min) dreht, tritt das aus dem Gemischausgang 17 austretende Gemisch, welches ohne größere Tröpfchen ist, als Feinstnebel-Gemisch aus und verteilt sich gleichmässig mit der übrigen Brennluft, die durch die Flügel 15 strömt.

Auf diese Weise besteht schon stromauf der Drosselklappe 2 ein tropfenfreies Kraftstoff-Luftgemisch, was nur noch geringe Kondensatbildung beim Durchgang stromab der Drosselklappe 6 bewirkt.

Durch die nachfolgende zweistufige Kondensataufbereitung und Gemischhomogenisierung wird ein Gesamtgemisch erreicht, wie es bei keiner anderen Gemischbildung möglich ist. Dies bringt nicht nur eine gleichmässige Verteilung im Kraftstoff-Luftanteil zu den einzelnen Zylindern sondern auch ein so gut aufbereitetes Gemisch, daß ohne Zünd- und Durchbrennschwierigkeiten mit Gemischen von Lambda 1,5 gefahren werden kann.

Prüfungen bei einer Technischen Universität mit dieser Einrichtung, gefahren in der ersten Stufe mit Abgas und in der zweiten Stufe mit Brennluft, brachten folgende Ergebnisse in den NOx-Werten:

| km/h | Serie ppm | Erfindung ppm | g/km |
|---|---|---|---|
| 35/3. | 720 | 137 | 0,16 |
| 50/3. | 1 380 | 174 | 0,19 |
| 60/3. | 2 300 | 271 | 0,28 |
| 90/5. | 4 600 | 503 | 0,42 |
| 120/5. | 4 550 | 414 | 0,44 |
| Mittelwert: | 2 710 | 300 | 0,30 |

Die NOx werden durch die Erfindung um 89% gegenüber einer Serienausführung des Motors gesenkt.

Sie liegen im Bereich von 35 - 120 km/h bei 0,48 g/mile und damit um 52% unter dem US-Abgaslimit von 1,0 g/mile.

TÜV-Messungen ergaben eine Reduzierung des Benzinverbrauchs um 15% beim CVS-Test und 90 km/h und um 21% bei 120 km/h.

5

ZEICHNUNGS-LEGENDE

1 Gehäuse
2 Drosselklappe
3 Aufbereitungsvorrichtung (oben)
4 Aufbereitungsvorrichtung (unten)
5 Einlaß
6 Drosselklappe
7 Luftkanal
8 Schlitz (Vorr.3)
9 Schlitz (Vorr.4)
10 Schräge
11 Schräge
12 Abreißkante
13 Zerstäuberrotor
14 Flügel
15 Rotor
16 Eingang
17 Gemischausgang
18 Lager
19 Stator
20 Kraftstoffzuführung
21 Ausspritzkanal
22 Drosselklappenwelle
23 Ansaugkanal
24 Öffnungswinkel (Schlitz 8)
25 Einlaß (Vorr.4)
26 Drosselklappe (Vorr.4)
27 Luftkanal (Vorr.3)
28 Öffnungswinkel (Schlitz 9)
29 Pfeilrichtung
30 Pfeilrichtung
31 Pfeilrichtung
32 Pfeilrichtung
33 Längsachse
34 Schlitzachse (Vorr.3)
35 Schlitzachse (Vorr.4)
36 Teilungslinie
38 Schlitzwandung (Schlitz 8)
39 Schlitzwandung (Schlitz 9)

**Ansprüche**

1. Vorrichtung zum Einleiten von zusätzlichen Gasströmen in den Ansaugkanal eines Vergasermotors mittels einer ersten Aufbereitungsvorrichtung mit sich in der Ansaugkanalwandung stromab der Drosselklappe gegenüberliegenden, sich in Umfangsrichtung des Ansaugkanals über einen Umfangswinkel von weniger als 180° erstreckenden Schlitzen, welchen das zusätzliche Gas durch eine oder mehrere Zuleitungen zugeführt wird, wobei die Längsachse der Drosselklappenwelle den Bereich der nicht durch die Schlitze unterbrochenen Wandungen durchsetzt und zur Steuerung des Durchsatzes des zusätzlichen Gases durch diese Zuleitungen in Abhängigkeit von dem im Ansaugkanal herrschenden Unterdruck in jeder Zuleitung ein Steuerorgan, insbesondere eine weitere Drosselklappe oder ein Ventil vorgesehen ist, wobei die Schlitze im Bereich der maximalen Kondensatbildung symmetrisch zu einer durch Verschiebung der Längsachse der Drosselklappenwelle parallel zu sich selbst entlang der Längsachse des Ansaugkanals erzeugten Ebene angeordnet sind,
**dadurch gekennzeichnet,** daß mindestens eine zweite Aufbereitungsvorrichtung (4) stromab und parallel zur ersten Aufbereitungsvorrichtung (3) im Ansaugkanal (23) angeordnet ist, und daß die Schlitzachse (34)

6

der Schlitze (8) der ersten Aufbereitungsvorrichtung (3) senkrecht zur Schlitzachse (35) der Schlitze (9) der zweiten Aufbereitungsvorrichtung (4) angeordnet ist.

2. Vorrichtung nach Anspruch 1, **dadurch gekennzeichnet**, daß den Schlitzen (8) der ersten Aufbereitungsvorrichtung (3) das zusätzliche Gas ab dem Leerlauf des Vergasermotors zugeführt wird und daß den Schlitzen (9) der zweiten Aufbereitungsvorrichtung (4) das zusätzliche Gas ab dem mittleren Teillastbereich zugeführt wird.

3. Vorrichtung nach Anspruch 2, **dadurch gekennzeichnet**, daß das zusätzliche Gas den Schlitzen (8,9) mit hoher Geschwindigkeit bis Schallgeschwindigkeit entströmt.

4. Vorrichtung nach einem der Ansprüche 1 - 3, **dadurch gekennzeichnet**, daß das zusätzliche Gas Zusatzluft ist.

5. Vorrichtung nach einem der Ansprüche 1 - 3,
**dadurch gekennzeichnet**, daß das zusätzliche Gas Abgase des Verbrennungsmotors ist.

6. Vorrichtung nach einem der Ansprüche 1 - 5, **dadurch gekennzeichnet**, daß die Summe der Öffnungswinkel (24,28) der Schlitze (8,9) der ersten und zweiten Aufbereitungsvorrichtung (3,4) sich etwa zu 360° summieren.

7. Vorrichtung nach einem der Ansprüche 1 - 6, **dadurch gekennzeichnet**, daß der Schlitzquerschnitt der Schlitze (9) der zweiten Aufbereitungsvorrichtung (4) größer ist als der Schlitzquerschnitt der Schlitze (8) der ersten Aufbereitungsvorrichtung (3).

8. Vorrichtung nach Anspruch 7, **dadurch gekennzeichnet**, daß den Schlitzen (8) der ersten Aufbereitungsvorrichtung (3) Abgas und den Schlitzen (9) der zweiten Aufbereitungsvorrichtung (4) Zusatzluft zugeführt wird.

9. Vorrichtung nach Anspruch 7, **dadurch gekennzeichnet**, daß beiden Aufbereitungsvorrichtungen (3,4) Zusatzluft zugeführt wird.

10. Vorrichtung nach einem der Ansprüche 1 - 9, **dadurch gekennzeichnet**, daß die Schlitze (8,9) als Lavalldüse ausgebildet sind.

11. Vorrichtung nach einem der Ansprüche 1 - 10, **dadurch gekennzeichnet**, daß stromab der Mündung jeden Schlitzes (8,9) die Schlitzwandung (38,39) schräg radial einwärts geneigt ist, (Schräge 10).

12. Vorrichtung nach Anspruch 1, **dadurch gekennzeichnet**, daß die schräg radial einwärts geneigte Schlitzwandung (Schräge 10) untere Abreißkanten (12) aufweist.

13. Vorrichtung nach einem der Ansprüche 1 - 12, **dadurch gekennzeichnet**, daß stromauf der Aufbereitungsvorrichtungen (3,4) ein Turbo-Zerstäuber (13-15) zur Zerstäubung des Kraftstoffs im Ansaugkanal (23) angeordnet ist.

FIG 1

FIG 2

FIG 3

G 1510

FIG 4

FIG 5

FIG 6

G 151

Durchflußmenge am
Schlitz 8,9

Schlitz 9

Schlitz 8

1000  2000  3000  4000  5000  6000      ppm

*FIG 7*

38

8,9

10

29,30

36

38

39

11

12

11

12

*FIG 8*